# EUROPÄISCHE PATENTSCHRIFT

(11) **EP 0 510 139 B1**
(45) Veröffentlichungstag und Bekanntmachung des Hinweises auf die Patenterteilung: **06.09.1995**
(21) Anmeldenummer: 91918680.9
(22) Anmeldetag: 02.11.1991
(51) Int. Cl.: G01P 15/11, B60R 21/32

(54) **Beschleunigungssensor**
Accelerometer
Acceleromètre

(30) Priorität: 14.11.1990 DE 4036224
(43) Veröffentlichungstag der Anmeldung: 28.10.1992
(73) Patentinhaber: ROBERT BOSCH GMBH, 70442 Stuttgart (DE)
(72) Erfinder: KAISER, Harry, D-7145 Markgröningen (DE); ABENDROTH, Manfred, D-7142 Marbach/Neckar (DE)
(86) Internationale Anmeldenummer: DE9100853
(87) Internationale Veröffentlichungsnummer: WO9208989

(56) Entgegenhaltungen:
- EP-A- 0 012 325
- EP-A- 0 251 069
- DE-U- 8 909 177
- FR-A- 2 316 977
- W. Göpel et al. : "Sensors", vol. 5, "Magnetic Sensors", 1989, VCH Weinheim (DE), Seiten 81-84

## Beschreibung

### Stand der Technik

Die Erfindung geht aus von einem Sensor zum selbsttätigen Auslösen von Sicherheitseinrichtungen in Kraftfahrzeugen nach der Gattung des Hauptanspruchs. Es ist bereits ein derartiger Sensor bekannt, bei dem als seismische Masse eine Kugel im Mittelpunkt einer Pfanne mit ansteigenden Flanken angeordnet ist. Aus dieser Ruhelage wird die Kugel entweder bei Überschreiten einer vorgegebenen Beschleunigungsschwelle oder bei Neigung des Kraftfahrzeugs um einen vorgegebenen Winkel ausgelenkt. Durch die dabei ausgeführte Rollbewegung der Kugel wird eine Referenzlichtschranke gesteuert und somit ein Meßsignal erzeugt. Ferner ist es aus der DE-A1-35 40 947.9 bekannt, im Innenraum eines Gehäuses einen etwa zylinderförmigen Metallzylinder als seismische Masse anzuordnen. In der seismischen Masse ist eine achsparallel ausgebildete Bohrung vorhanden, durch die in Grundstellung das Licht eines Senders zu einem Empfänger gelangen kann. Wird die seismische Masse verkippt, so wird die auf dem Empfänger auftreffende Lichtmenge verringert und somit ein Meßsignal abgegeben. Zur Beeinflussung der Auslöseschwelle wird mit Hilfe einer im Boden der seismischen Masse ausgebildeten Ausnehmung der Schwerpunkt der seismischen Masse verlagert. Diese Sensoren haben aber den Nachteil, daß ein realtiv großer Kippwinkel notwendig ist, um ein eindeutiges Meßsignal zu erhalten.

Beim Sensor nach der Schrift DE-A-2 630 553 wird als seismische Masse ein Pendel verwendet. Auf der Stirnseite des Pendels ist ein Permanentmagnet angeordnet, der in Wirkverbindung mit einer Hallvorrichtung steht. Durch die angreifende Beschleunigung wird das Pendel aus seiner Grundposition ausgelenkt. Aufgrund der Pendelbewegung wird der Abstand zwischen dem Magneten und der Halleinrichtung vergrößert, so daß die Größe des Magnetfeldes in der Halleinrichtung verändert wird. Bei dem hier verwendeten Meßprinzip wird ein breites Magnetfeld verwendet. Bei diesem Sensor ist aber kein genaues und scharfes Meßsignal zur Auslösung von Sicherheitseinrichtungen erreichbar.

### Vorteile der Erfindung

Der erfindungsgemäße Sensor mit den kennzeichnenden Merkmalen des Hauptanspruchs hat demgegenüber den Vorteil, daß er einfach und robust baut. Im Ruhezustand ist seine Funktion ständig überprüfbar, so daß seine Störanfälligkeit und Ausfallwahrscheinlichkeit relativ gering ist. Durch die Feldumkehr des magnetischen Feldes im gekippten Zustand ergeben sich eindeutige Schaltpunkte. Bei dem großen Bereich der Einsatztemperaturen von -40 bis +125 °C sind große Toleranzen der Schaltpunkte des Hallsensors möglich. Der Sensor löst zuverlässig aus, da durch die Feldumkehr eine Signaländerung des Hallschalters von einem relativ hohen in ein relativ niedriges Meßsignal bewirkt wird. Auch bei Drehung des Sensors, d. h. bei der Detektion eines Überschlags eines Kraftfahrzeugs ist ein sicheres Auslösen des Sensors möglich. Der Sensor arbeitet nahezu verschleißfrei. Durch seine einfache Ausgestaltung ist er für die Serienfertigung geeignet. Die Ansprechschwelle ist leicht durch Variation des seismischen Körpers an verschiedene Einsatzfälle anpaßbar. Er läßt sich mit hoher Lebensdauer, Funktionssicherheit und Fertigungssicherheit herstellen und klein bauen, so daß er für den Einsatz in elektronischen Schaltungen geeignet ist. Bei der Fertigung des Sensors sind keinerlei Abgleich- und Justagearbeiten erforderlich.

Durch die in den Unteransprüchen aufgeführten Maßnahmen sind vorteilhafte Weiterbildungen des im Hauptanspruch angegebenen Sensors möglich.

### Zeichnung

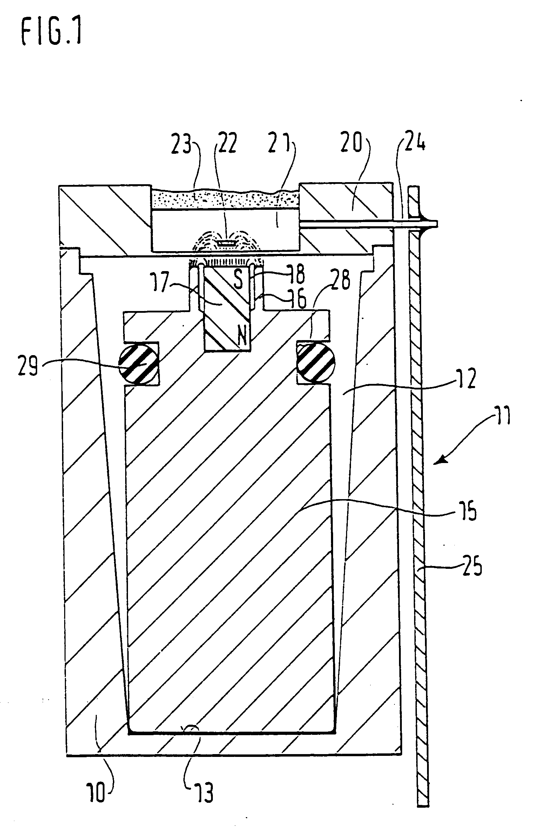

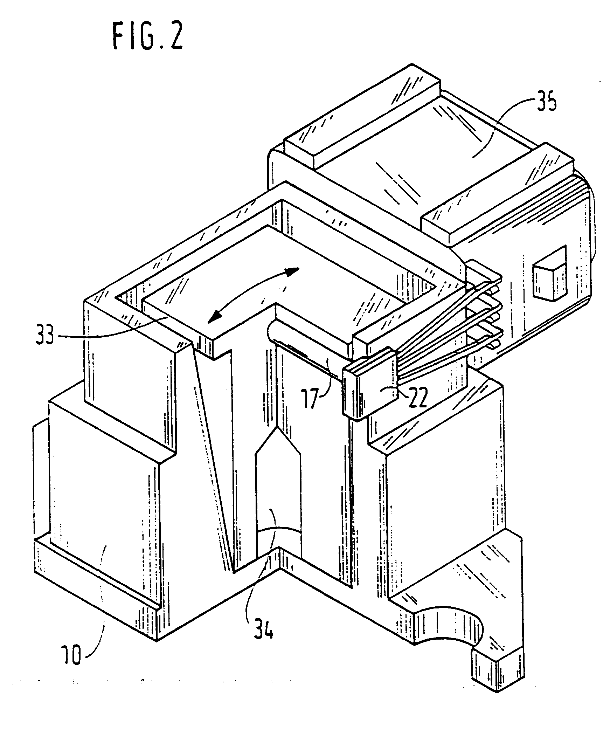

Ausführungsbeispiele der Erfindung sind in der Zeichnung dargestellt und in der nachfolgenden Beschreibung näher erläutert. Es zeigen die Figur 1 einen Längsschnitt durch einen in allen Richtungen einer Ebene auslösenden Sensor und Figur 2 eine perspektivische Darstellung mit teilweisem Aufriß eines Sensors, der nur in einer Achsrichtung auslöst.

### Beschreibung der Ausführungsbeispiele

In Figur 1 ist mit 10 das etwa becherförmige Gehäuse eines Sensors 11 bezeichnet, dessen Innenraum Seitenwände 12 mit konstant ansteigendem Winkel α aufweist. Die Größe des Winkels α wird dabei auf die maximal zulässige Hysterese des Kippwinkels abgestimmt. Dieser Kippwinkel wird vom Auslösewinkel oder der Auslösebeschleunigung des Sensors 11 bestimmt. Auf dem Boden 13 des Innenraums liegt mit einer Stirnseite ein länglicher Körper 15 auf, der als seismische Masse dient und aus magnetisch leitendem Material besteht. Dieser längliche Körper 15 kann insbesondere ein Quader mit rechteckigem oder quadratischem Querschnitt (siehe Figur 1) oder ein Zylinder sein. Die dem Boden 13 zugewandten Kanten des Körpers 15 sind leicht abgerundet, um ein leichtes Verkippen des Körpers 15 im Innenraum des Gehäuses 10 zu ermöglichen. Auf der dem Boden 13 gegenüberliegenden Stirnseite ist ein hohlzylinderförmiger Fortsatz 16 ausgebildet, in dessen Inneren ein Permanentmagnet 17 eingesetzt ist. Die Polarisationsrichtung des Permanentmagneten 17 ist in Achsrichtung des Körpers 15 ausgerichtet. Der Permanentmagnet 17 und der Fortsatz 16 sollen annähernd bündig abschließen. Zwischen dem Permanentmagneten 17 und der Innenwand des Fortsatzes 16 befindet sich ein schmaler Luftspalt 18. Die Tiefe des Luftspalts 18 und somit die Länge des Fortsatzes 16 entspricht in etwa der halben Achslänge des Permanentmagneten 17. Dadurch befindet sich der Permanentmagnet 17 zur einen Hälfte im Fortsatz 16 und zur anderen Hälfte im Körper 15.

Der Innenraum des Gehäuses 10 ist von einem Deckel 20 abgeschlossen. In einer Ausnehmung 21 des Deckels 20 ist diametral gegenüber dem Permanentmagneten 17 ein Hallschalter 22 angeordnet. Diese Ausnehmung 21 ist von einer Vergußmasse 23 abgeschlossen, die den Hallschalter 22 vor Umwelteinflüssen schützt. In nicht näher dargestellter Weise ist der Hallschalter 22 über eine Verbindungsleitung 24 und eine Lötfahne 25 mit einem nicht dargestellten Stecker verbunden. Ferner ist am Körper 15 möglichst nahe im Bereich des Fortsatzes 16 eine ringförmige Ausnehmung 28 ausgebildet, in die ein elastischer Ring 29 eingesetzt ist. Dieser elastische Ring 29 dient zur Geräuschminderung, um bei Verkippen des Körpers 15 einen relativ weichen Aufschlag des Körpers 15 an der Seitenwand 12 zu ermöglichen.

In der Figur 1 ist der Permanentmagnet 17 mit seinem magnetischen Nordpol in den aus magnetisch leitendem, insbesondere aus Eisen bestehenden Körper 15 eingebettet. Es ist aber auch in Abhängigkeit vom verwendeten Hallschaltertyp eine umgekehrte Polarisierungsrichtung des Permanentmagneten 17 denkbar. Der magnetische Fluß verläuft von der Nordpolfläche des Permanentmagneten 17 durch das Material des Körpers 15 in den Fortsatz 16 und tritt dort senkrecht heraus und über einen Weg durch Luft wieder in die Südpolfläche des Permanentmagneten 17 hinein. Durch die hülsenförmige Ausbildung des Fortsatzes 16 erhält man den für einen omnidirektionalen, d. h. in allen Richtungen einer Ebene auslösenden Sensor 10 rundum verlaufenden magnetischen Fluß. Der Durchmesser des Permanentmagneten 17 und die Größe des Hallschalters 22 sind dabei so aufeinander abgestimmt, daß in Ruhestellung des Sensors der Hallschalter 22 nur von den in die ihm zugewandte Stirnseite des Permanentmagneten 17 mündenden bzw. ausgehenden Magnetlinien durchströmt wird. Diese Ausbildung wird ferner noch durch die Breite des Luftspalts 18 beeinflußt. Statt eines Luftspalts 18 kann dieser Spalt auch mit einem magnetisch nicht leitendem Material ausgefüllt sein. Zur Magnetfeldkonzentration ist es notwendig, die Stirnseite des Fortsatzes 16 und die Stirnseite des Permanentmagneten 17 möglichst klein auszugestalten.

Wirkt auf den Sensor 11 eine Beschleunigung ein oder wird er um einen Winkel gekippt, so kippt ebenfalls der Körper 15, so daß der Permanentmagnet 17 gegenüber dem Hallschalter 22 aus seiner Grundstellung bewegt wird. Durch dieses Kippen des Körpers 15 wird auch das magnetische Feld des Permanentmagneten 17 mit verschoben. Dadurch durchdringen im gekippten Zustand nicht mehr die Feldlinien im Bereich der Stirnseite des Permanentmagneten 17 den Hallschalter 22, sondern die Feldlinien im Bereich der Stirnseite des Fortsatzes 16. Somit durchdringt der magnetische Fluß den Hallschalter in umgekehrter Richtung gegenüber dem nicht gekippten Zustand, wobei nur der Kippweg des Körpers 15 so groß sein muß, daß sich im gekippten Zustand der Hallschalter 22 über der ringförmigen Stirnfläche des Fortsatzes 16 befinden muß. Diese Änderung der Richtung des magnetischen Flusses ist dadurch zu erklären, daß man in der Physik davon ausgeht, daß die Magnetlinien vom Norpol zum Südpol des Permanentmagneten 17 verlaufen. Dadurch sind die aus der Polfläche des Fortsatzes 16 heraustretenden Magnetlinien zum Hallschalter 22 hin gerichtet, während die Feldlinien im Bereich der Stirnseite des Permanentmagneten 17 die entgegengesetzte Richtung, d. h. vom Hallschalter 22 weg, aufweisen würden. Durch die Aufteilung des magnetischen Flusses des Permanentmagneten 17 auf die gesamte, umlaufende Polfläche des Fortsatzes 16 ist die den Hallschalter 22 im gekippten Zustand durchdringende Flußdichte natürlich wesentlich geringer als in der Ruhestellung. Durch diese Änderung der Flußdichte und gleichzeitig durch die Änderung der Flußrichtung erhält man somit in einfacher Weise ein eindeutiges Meßsignal, für das nur ein relativ geringer Kippweg notwendig ist. Ferner wird dadurch ein Einsatz billiger unipolarer Hallschalter ermöglicht. Normalerweise haben diese billigen Hallschalter Schaltpunkte mit relativ großen Toleranzen. Diese Schaltpunkte werden insbesondere durch den geforderten Einsatztemperaturbereich von -40 bis +125 °C bestimmt. Durch die oben beschriebene Umkehr des magnetischen Felds im gekippten Zustand wirkt sich die Toleranzlage des Ausschaltpunkts (Release-Point) des Hallschalters jedoch nur noch relativ gering aus. Es ist nur noch notwendig, im nichtgekippten Zustand eine ausreichende Flußdichte zur Gewährleistung des Einschaltpunktes (Operate-Point) zu realisieren. Werden als Permanentmagnete 17 Magnete aus seltenen Erdenwerkstoffe, wie z. B. Neodym-Eisen-Bor oder Cobalt-Samarium verwendet, so erhält man immer ein genügend starkes Magnetfeld, wenn der Luftspalt zum Hallschalter nicht zu groß gewählt wird. Die durch das Kippen hervorgerufene Änderung des Magnetfelds bewirkt am Ausgang des Hallschalters 22 eine Signaländerung von einem relativ niedrigen auf einen relativ hohen Wert. Damit kann relativ zuverlässig eine Sicherheitsvorrichtung zum Schutz der Insassen eines Kraftfahrzeugs aktiviert werden.

Selbst bei Drehung des Sensors 11 in die Überkopflage legt sich der Körper 15 immer an die Seitenwand 12 des Gehäuses 10 an, so daß sich der Permanentmagnet 17 in der gleichen Position befindet, wie in der oben beschriebenen gekippten Stellung. Dadurch wird auch in dieser Stellung zwangsweise die Sicherheitsvorrichtung ausgelöst.

In Figur 2 ist ein Beschleunigungsschalter dargestellt, der nur in einer Bewegungsrichtung auslöst. Die Ausbildung des Gehäuses 10 entspricht dem der Figur 1. Um nur eine Auslöserichtung zu detektieren, ist der Permanentmagnet 17 quer zu dieser Auslöserichtung im Körper 15a angeordnet, d. h. er befindet sich in einer Seitenwand des Körpers 15a. Die Ausbildung des Permanentmagneten 17, des Fortsatzes 16 und somit des Magnetflusses entspricht der Ausbildung nach der Figur 1. Der Hallsensor 22a ist deshalb nicht im Deckel, der in der Figur 2 nicht dargestellt ist, sondern in der zugewandten Seitenwand des Gehäuses 10 angeordnet. Am oberen Ende des Körpers 15a, d. h. im Bereich des Permanentmagneten 17 ist mindestens auf den beiden Seiten der Auslöserichtung ein Anschlag 33, z. B. durch Fräsung ausgebildet. Dadurch ist es möglich, unterschiedliche Rückschaltpunkte des Körpers 15a zu erhalten, um den Körper 15a wieder aus der gekippten in seine Auslösestellung zu bewegen. Ferner ist in dem Körper 15a vom Boden her eine Sacklochbohrung 34 eingebracht, um das Gewicht des Körpers 15a zu verändern. Je nach Größe dieser Bohrung 34 kippt der Körper 15a früher oder später. Ferner muß die Sacklochbohrung 34 nicht achsgleich zur Achse des Körpers 15a ausgebildet sein. Je nachdem in welche Richtung sie parallel zur Achse des Körpers 15a verschoben ist, kippt der Körper 15a eher nach der einen Seite als nach der gegenüberliegenden. Dadurch ist es möglich, einer Kipprichtung eine bevorzugte Gewichtung zu geben.

In der Figur 2 ist auch ein dreipoliger Stecker 35 dargestellt, zu dem die Lötfahne 25 des Hallschalters 22 führt. Dieser Stecker 35 kann auch bei der Ausbildung nach der Figur 1 verwendet werden.

## Patentansprüche

1. Sensor (11) zum selbsttätigen Auslösen von Sicherheitseinrichtungen in Kraftfahrzeugen, mit einem Gehäuse (10), in dessen Gehäuseausnehmung ein als seismische Masse dienender Körper (15) angeordnet ist, der bei Angreifen einer Beschleunigung von einer Grundstellung in eine Kippstellung ausgelenkt wird und bei Überschreiten eines vorgegebenen Schwellwertes der Beschleunigung ein Steuersignal auslöst, wobei im aus magnetisch leitendem Material bestehenden Körper (15) ein Permanentmagnet (17) eingebettet ist, der mit einem Hall-Element (22) in Wirkverbindung steht, wobei sich ein den Permanentmagneten (17) umgebender Bereich (18) aus magnetisch nichtleitendem Material zwischen dem Permanentmagneten (17) und dem Körper (15) befindet, wobei das Hall-Element (22) im wesentlichen die parallel zur Polarisationsrichtung des Permanentmagneten (17) verlaufenden Feldlinien bewertet, und so angeordnet ist, daß das Hall-Element (22) in der Grundstellung des Körpers (15) von in einer Richtung parallel zur Polarisationsrichtung des Permanentmagneten (17) verlaufenden Magnetlinien und in der Kippstellung des Körpers von in entgegengesetzter Richtung verlaufenden Magnetlinien beaufschlagt ist.

2. Sensor nach Anspruch 1, dadurch gekennzeichnet, daß zwischen dem Körper (15) und dem Permanentmagneten (17) wenigstens über die halbe Länge des Permanentmagneten (17) ein Luftspalt (18) ausgebildet ist.

3. Sensor nach Anspruch 1 und/oder 2, dadurch gekennzeichnet, daß der Permanentmagnet (17) teilweise in einem Fortsatz (16) des Körpers (15) angeordnet ist.

4. Sensor nach Anspruch 3, dadurch gekennzeichnet, daß der Fortsatz hohlzylinderförmig ausgebildet ist.

5. Sensor nach einem der Ansprüche 1 bis 4, dadurch gekennzeichnet, daß die Innenwände des Gehäuses (10) schräg zur Längsachse des Körpers (15) verlaufen.

6. Sensor nach einem der Ansprüche 3 bis 5, dadurch gekennzeichnet, daß die Stirnseite des Permanentmagneten (17) bündig mit dem Fortsatz (16) der seismischen Masse (15) abschließt.

7. Sensor nach einem der Ansprüche 1 bis 6, dadurch gekennzeichnet, daß der seismische Körper (15) als Zylinder ausgebildet ist und auf seiner dem Permanentmagneten (17) abgewandten Stirnseite eine Ausnehmung (34) aufweist.

8. Sensor nach einem der Ansprüche 1 bis 6, dadurch gekennzeichnet, daß der seismische Körper (15) als Quader ausgebildet ist, der eine rechteckige oder quadratische Grundfläche aufweist und auf seiner dem Permanentmagneten (17) abgewandten Stirnseite eine Ausnehmung (34) aufweist.

## Claims

1. Sensor (11) for automatically triggering safety devices in motor vehicles, having a housing (10) in whose housing recess a body (15) is arranged which is used as a seismic mass, which is deflected from a basic position into a tilted position when any acceleration acts and triggers a control signal if a predetermined threshold value of the acceleration is exceeded, a permanent magnet (17) being embedded in the body (15), which is composed of material having magnetic permeability, which permanent magnet (17) is operatively connected to a Hall element (22), a region (18) which surrounds the permanent magnet (17) and is composed of material which is not magnetically permeable being located between the permanent magnet (17) and the body (15), the Hall element (22) essentially assessing the lines of force which run parallel to the polarization direction of the permanent magnet (17) and being arranged such that the Hall element (22) is acted on in the basic position of the body (15) by magnetic lines of force which run in a direction parallel to the polarization direction of the permanent magnet (17), and being acted on in the tilted position of the body by magnetic lines of force which run in the opposite direction.

2. Sensor according to Claim 1, characterized in that an air gap (18) is constructed between the body (15) and the permanent magnet (17), at least over half the length of the permanent magnet (17).

3. Sensor according to Claim 1 and/or 2, characterized in that the permanent magnet (17) is partially arranged in a projection (16) of the body (15).

4. Sensor according to Claim 3, characterized in that the projection is constructed in the form of a hollow cylinder.

5. Sensor according to one of Claims 1 to 4, characterized in that the inner walls of the housing (10) run inclined with respect to the longitudinal axis of the body (15).

6. Sensor according to one of Claims 3 to 5, characterized in that the end of the permanent magnet (17) terminates flush with the projection (16) of the seismic mass (15).

7. Sensor according to one of Claims 1 to 6, characterized in that the seismic body (15) is constructed as a cylinder and has a recess (34) on its end which faces away from the permanent magnet (17).

8. Sensor according to one of Claims 1 to 6, characterized in that the seismic body (15) is constructed as a right parallelepiped which has a rectangular or square base surface and has a recess (34) on its end which faces away from the permanent magnet (17).

## Revendications

1. Détecteur (11) pour le déclenchement automatique de systèmes de sécurité dans des véhicules à moteur, avec un boîtier (10) à l'intérieur duquel on dispose un corps (15) servant de masse sismique, qui est dévié depuis une position de base et mis dans une position de basculement lorsqu'il se produit une accélération et, en cas de dépassement d'une valeur de seuil prédéfinie de l'accélération, déclenche un signal de commande, un aimant permanent (17) étant noyé dans le corps (15) réalisé en matériau magnétiquement conducteur, aimant qui est en liaison opérationnelle avec un élément à effet Hall (22), une zone (18) qui entoure l'aimant (17) et qui est en un matériau magnétiquement non conducteur se trouvant entre l'aimant permanent (17) et le corps (15), l'élément à effet Hall (22) privilégiant sensiblement les lignes de champ qui s'étendent parallèlement au sens de polarisation de l'aimant permanent (17) et étant disposé de telle façon que l'élément à effet Hall (22) soit sollicité, dans la position de base du corps (15), par des lignes de champ qui s'étendent parallèlement au sens de polarisation de l'aimant permanent (17) et, quand le corps est en position basculée, par des lignes de champ magnétique qui s'étendent dans le sens opposé.

2. Détecteur selon la revendication 1, caractérisé en ce qu'on constitue entre le corps (15) et l'aimant permanent (17), au moins sur la moitié de la longueur de l'aimant permanent (17), un entrefer (18).

3. Détecteur selon la revendication 1 et/ou 2, caractérisé en ce que l'aimant permanent (17) est disposé en partie dans un prolongement (16) du corps (15).

4. Détecteur selon la revendication 3, caractérisé en ce que le prolongement a la forme d'un cylindre creux.

5. Détecteur selon l'une des revendications 1 à 4, caractérisé en ce que les parois intérieures du boîtier (10) s'étendent obliquement par rapport à l'axe longitudinal du corps (15).

6. Détecteur selon l'une des revendications 3 à 5, caractérisé en ce que la face frontale de l'aimant permanent (17) se termine à fleur du prolongement (16) de la masse sismique (15).

7. Détecteur selon l'une des revendications 1 à 6, caractérisé en ce que le corps sismique (15) est constitué comme un cylindre et présente, sur sa face frontale située à l'opposé de l'aimant permanent (17), un évidement (34).

8. Détecteur selon l'une des revendications 1 à 6, caractérisé en ce que le corps sismique (15) est constitué comme un parallélépipède qui présente une surface de base rectangulaire ou carrée et qui présente sur sa face frontale située à l'opposé de l'aimant permanent (17), un évidement (34).
